(19) Europäisches Patentamt
European Patent Office
Office européen des brevets

(11) EP 3 609 127 B1

(12) **EUROPEAN PATENT SPECIFICATION**

(45) Date of publication and mention of the grant of the patent:
**08.06.2022 Bulletin 2022/23**

(21) Application number: **18188158.2**

(22) Date of filing: **09.08.2018**

(51) International Patent Classification (IPC):
***H04L 45/16*** *(2022.01)* ***H04L 49/201*** *(2022.01)*
***H04L 12/18*** *(2006.01)*

(52) Cooperative Patent Classification (CPC):
**H04L 49/201; H04L 12/189; H04L 45/16**

(54) **METHOD FOR CONTROL SIGNALLING OVERHEAD IN AN ACCESS NETWORK**

VERFAHREN ZUR STEUERUNG DES SIGNALISIERUNGSAUFWANDES IN EINEM ZUGANGSNETZ

PROCÉDÉ POUR COMMANDER UN SURDÉBIT DE SIGNALISATION DANS UN RÉSEAU D'ACCÈS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.02.2020 Bulletin 2020/07**

(73) Proprietor: **Deutsche Telekom AG**
**53113 Bonn (DE)**

(72) Inventors:
- **BLENDIN, Jeremias**
  **60487 Frankfurt/Main (DE)**
- **NOBACH, Leonhard**
  **55120 Mainz (DE)**
- **KOLBE, Hans-Jörg**
  **64295 Darmstadt (DE)**

(74) Representative: **Vossius & Partner**
**Patentanwälte Rechtsanwälte mbB**
**Siebertstrasse 3**
**81675 München (DE)**

(56) References cited:
**US-A1- 2012 002 546**
**US-A1- 2013 128 886**
**US-A1- 2016 119 159**
**US-A1- 2016 127 139**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 609 127 B1

## Description

### Field of the invention

The invention relates to an access network, the access network comprising at least one Multicast Traffic Sender, MTS, and at least one Multicast Traffic Replicator, MTR, and a method for control signaling overhead in an access network, with separated multicast control and user planes by switch from per group member signaling to per multicast user signaling.

### Background

Residential broadband access network platforms such as CORD (Central Office Re-architected as a Data Center) are currently under development in Internet Service Provider (ISP) networks. In these architectures, multiple subscribers are aggregated by an access node (e.g. OLT device or an IP DSLAM) and interconnected to a subscriber termination device via a layer-2 infrastructure such a datacenter fabric as depicted in Figure 1.

Figure 1 shows an exemplary residential access network comprising a Residential Gateway, RG, connected to an Access Node, AN, said AN being connected to a Broadband Network Gateway, BNG, or Service Edge, and said BNG or Service Edge is connected to a Label Edge Router, LER or Media Source (in other words, the Internet Service Provider, ISP). The residential access network shown in Figure 1 is a tree-like structure, having, for example, from 1 to 4000 number of devices connected to a single AN.

The state of the art is depicted in Figures 2 and 3. The four major components of the system are the Multicast Traffic Sender, MTS, (i.e. Broadband Network Gateway, BNG), the Multicast Traffic Replicator, MTR (i.e. access node, AN), and the residential gateway (RG) or user as depicted in Figure 1 as well as the multicast Media Source, MS, that is connected to the ISP core network.

The RG is located on the premises of the subscriber and terminates the access link as well as the Point-to-Point over Ethernet, PPPoE, connection. It is directly connected to the access node by the relevant access technology, e.g. Digital Subscriber Line (DSL) or Passive Optical Networks (PON). The access node creates a virtual circuit for the access line to the BNG, usually using VLAN tagging. The MTS terminates the PPPoE connection of the subscriber. Finally, the media source is connected to the MTS.

Figure 2 shows an exemplary residential access network wherein the multicast processing is only performed on the MTS (the BNG in this example). In particular, Figure 2 shows a user or RG, signaling to the MS (through the AN and the BNG) a message to join the multicast group A (see the field IGMP "Join Group A). After joining the multicast group, the MTS, which hosts the multicast state for all subscribers, duplicates the packet received from the media source as required by the multicast group A and adds the PPPoE tunnel header. The location of the duplication process in the data plane and the multicast signal processing in the control plane is indicated by the splitting street sign in Figure 2 (placed in the MTS or BNG).

Figure 3, similarly to Figure 2, shows an exemplary residential access network except for the fact that the multicast processing is performed on both the MTR and the MTS. In particular, in Figure 3, the multicast for subscribers is moved to a separate encapsulation, i.e. the traffic is transported in a separate VLAN to the subscribers, which is not encapsulated in PPPoE.

To join a multicast group, the subscriber sends an IGMPv2 or IGMPv3 group join message that is forwarded by the MTR to the MTS, where it is processed and a corresponding PIMv2 message is sent to the media source. The resulting media stream is sent from the media source to the MTS addressed to the group multicast IP as well as the corresponding MAC address.

US 2016/0119159 A1 relates to a data packet forwarding method including receiving, by a network node, a data packet that comprises a bit string, a BFIR identifier (ID), and a multicast replication path (MRP) ID, wherein the BFIR ID identifies an ingress network node for a multicast group, and wherein the MRP ID identifies the multicast group, identifying an entry in a BIER Replication Path Cache Table (BRCT) using the BFIR ID and the MRP ID, wherein the entry identifies a replication neighbor (NBR) list associated with the BFIR ID and the MRP ID, and forwarding the data packet in accordance with the replication NBR list.

US 2016/127139 A1 relates to a network device that executes a method to forward a packet that is encoded using an explicit list encoding of sparse multicast group membership information with Bit Index Explicit Replication. The method includes receiving a packet that includes a bit string having a list of Bit Forwarding Router IDs (BFR-ids). The method further includes selecting a BFR-id identifying a destination Bit Forwarding Router (BFR) from the list for processing, looking up a forwarding bitmask for the destination BFR and a next-hop to reach the destination BFR in a bit index forwarding table, creating a copy of the packet, clearing the selected BFR-id from the packet, clearing BFR-ids from the packet and the copy of the packet based on the forwarding bitmask, and forwarding the copy of the packet to the next-hop neighbor.

US 2012/002546 A1 relates to a method of processing packets of a network processor. One or more tasks are generated corresponding to received packets associated with one or more data flows. A traffic manager receives a task corresponding to a data flow, the task provided by a processing module of the network processor. The traffic manager determines whether the received task corresponds to a unicast data flow or a multicast data flow. If the received task corresponds to a multicast data flow, the traffic manager determines, based on identifiers corresponding to the task, an address of launch data stored in launch data tables in a shared memory, and reads the launch data. Based on the identifiers and the read launch data, two or more output tasks are generated corresponding to the multicast data flow, and the two or more output tasks are added at the tail end of a scheduling queue.

US 2013/128886 A1 relates to a router that receives a leave message from a host on a subscriber circuit. The leave message indicates a request to stop receiving a multicast stream that is associated with a group object. The interface between the router and the network elements includes a remote multicast replication interface. A group specific query is then sent on the subscriber circuit, and is directed to hosts on the subscriber circuit and regards only the multicast group of the received request. Next the group object association with the subscriber circuit is removed from the record at the router if, in response to the group specific query, no host of the subscriber circuit reports receives the traffic stream corresponding to the multicast group identified in the leave message.

There are two major concepts related to this invention: bit-indexed replication and splitting the packet duplication between the MTR and the MTS.

Multicast Using Bit Strings

The idea of using bit-indexes in per-packet headers to implement multicasting is not new. The patent application US 2016/134518 A1 titled "DETERMINISTIC AND OPTIMIZED BIT INDEX EXPLICIT REPLICATION (BIER) FORWARDING'describes such an approach.

Multicast Replication in Broadband Access

The concept describes a major improvement over the state of the art by introducing a separate device that conducts the packet replication and injects the resulting packets including PPPoE header into the traffic of the subscribers. This approach improves the approach described in US 2016/134518 A1.

## Technical problem

Today, there are three approaches on how to implement the multicast distribution as described in the following paragraphs.

Multicast distribution approaches

A) Multicast processing on the MTS only

The MTS hosts the multicast state for all subscribers. It duplicates the packet received from the media source as required and adds the PPPoE tunnel header. The location of the duplication process in the data plane and the multicast signal processing in the control plane is indicated by the splitting street sign in Figure 2.

The advantage of this approach is that all multicast packets are included in the normal user traffic and encapsulated in PPPoE. This means that no special provisions for the multicast traffic are required on the subscriber's side. Furthermore, the access node is not involved in the multicast processing, leading to simpler control-plane software on the access node and no requirements to keep dynamic state for multicast. The drawback of this approach is twofold: first, the MTRs although usually connected to the MTS in a tree-like fashion are not part of the duplication process. Second, all packet duplicates for all subscribers are created on the MTS, which leads to an extremely high packet duplication load on this device.

The exclusion of the MTR in the multicast duplication process decreases the transmission efficiency, because multicast offers the highest efficiency gains in tree-like structures as depicted in Figure 1. Furthermore, with quickly increasing access link capacities (1, 10GbE) and slowly increasing maximum port speeds for Ethernet (100GbE0) this could lead to bottlenecks at the BNG ports. Considering that upcoming 4k or 8k video streams require up to 50Mbit/s bandwidth and create constant traffic, the effect of statistical multiplexing on the traffic patterns gets smaller. Assuming two HD video streams of 10Mbit/s per subscriber today, up to 5000 subscribers could be connected through a single 100GbE port of a BNG. With the advent of 8 video streams and the slow pace of development of Ethernet port speeds, only up to 2000 subscribers could be connected through a single 200 GbE port with two 50Mbit/s multicast video streams each.

The MTS as single point of multicast duplication results in a high number of packet duplication operations. Assuming up to two multicast streams per subscribers, up to 4000 residential gateways connected to an access node yields a total 8000 packet duplication operations at the same time. On a BNG with tens of connected access nodes, this requirement could result in up to hundreds of thousand packet duplication operations. The first issue leads to lowered transmission efficiency; the latter requires specialized high-performance hardware, which leads to high hardware costs for the BNG.

B) Multicast processing on the MTS and the MTR

Another common approach to implement multicast for subscribers is to move all multicast traffic to a separate encapsulation. The traffic is transported in a separate VLAN to the subscribers, which is not encapsulated in PPPoE.

This approach has the advantage that both the MTR and the MTS can apply industry-standard VLAN multicast processing. Furthermore, both the MTR and the MTS are involved in packet duplication, which increases the transmission efficiency. The location of the duplication process in the data plane and the multicast signal processing in the control plane is indicated by the splitting street sign in Figure 3.

The drawback of this approach is that the multicast traffic is not transmitted as a part of the standard packet encapsulation. Instead, it requires separate provisions for authentication, and configuration both on the subscriber's side as well as on the ISP side. Furthermore, the process auf measuring the band- width of a customer becomes more complex since some packets are PPPoE encapsulated while others are not. In addition, the access node is now actively involved in the multicast signalling. It has to process multicast-related messages such as IGMP packets and keeps dynamic multicast state. Finally, the multi-cast processing is part of the customer service. Therefore, the MTS has to signal the access node whether a specific customer is allowed to receive multicast at all, and if yes, which multicast group the customer is allowed to join. This requires the control plane of the access node to host the corresponding software, which makes it more complex and increases costs.

An overview on the duplication process for the two state-of-the-art approaches is given in Figure 4. In the state-of-the-art approach, all duplication logic of the PPPoE is located on the MTS or BNG (Figure 4.a). The last approach (Figure 4.b), described hereinafter, improves on that, but requires per multicast group state and multicast control logic on the access nodes.

In Figure 4.a, the users or RG are connected through the AN to the BNG via a tunnel or PPPoE encapsulation. In Figure 4, first, the users join the multicast signalling group. Then, the duplication is setup on the BNG and the media is transmitted afterwards to the users via PPPoE encapsulation and through the AN.

Similarly, in Figure 4.b, the users first join the multicast signalling group. However, in this case, the next step is to setup of the duplication settings at the AN and at the BNG. Then the media is transmitted to the users from the MS, but is not encapsulated via PPPoE.

C) <u>Multicast processing on a separate dedicated node</u>

This approach proposes a dedicated multicast processing node, which operates in parallel to the BNG. It receives and processes all multicast-related packets and conducts the packet duplication.

It alleviates some of the issues described before in the other two approaches, because it adds PPPoE headers to the packets, while relieving the actual MTS of the packet duplication load. However, the efficiency is not increased, because the access nodes are not involved in the packet duplication and it requires an additional device that is able to do PPPoE processing.

In sum, none of the existing approaches fulfills all requirements for implementing efficient multicast at the service edge of ISP networks with commercial off-the-shelf hardware:

- Approach A imposes an uneconomically high packet duplication workload on the MTS node.
- Approach B requires special provisions for multicast traffic and complex subscriber-control signaling as well as a high-performance multicast control-plane on the MTR.
- Approach C improves on both approaches, but still requires specialized hardware for packet duplication.

<u>Using Packet Templates</u>

The use of packet templates in combination with bit-indexed multicasting, the processing overhead on the access node is reduced. An example is shown in Figure 7. Figure 7 depicts the new header processing and shows the Multicast Bit Header processing according to the invention. An example for a Multicast Bit Header is given in Figure 11. In Figure 7, an exemplary residential access network of the above-mentioned situation is shown. A user or RG signals to the MS (through the AN and the BNG) a message to join the multicast group A (see the field IGMP "Join Group A"). After joining the multicast group, on the MTS or BNG, a PPPoE header is added to packets received from the media source with its Session-ID set (in this example) to 0xffff as depicted in Figures 7 and 8. Furthermore, a Multicast Bit header is added that encodes the RGs which should receive copies of packets addressed to the multicast group. In the MTR or access node, the media packet received from the BNG is copied according to the list of RGs that are denoted in the Multicast Bit header and sent to the corresponding RGs.

<u>Receiver-based Multicast Signaling</u>

Multicast signaling is conducted only when a potential multicast user joins or leaves the system. The actual per group, per packet signaling is done using in-band signaling using an additional multicast bit field header. The initial per user signaling provides all information needed on the access node to conduct the packet processing for the multicast user if they are references by the in-band duplication signaling.

The multicast bit field information is extracted from each packet on the access node. The packet is duplicated accordingly and the PPPoE session ID is written to fixed offset in the packet header. Figure 8 depicts the PPPoE header layout, which shows why a fixed offset is sufficient. The use of a fixed offset to write variables into the packet on the MTR relieves the MTR from parsing the PPPoE packet headers. Thereby the addition of a new header is offloaded from the access node to the BNG, reducing the feature requirements and costs of the access node device. The general approach is to move the complete multicast logic to the BNG, and encoding the packet duplication requirements into an additional header of each multicast packet using a bit field.

In addition, the length of the additional header is up to the discretion of the system designer. It should be noted that existing bit fields could be used to encode the bit string, such as the 64 least-significant bits of an IPv6 address of which the /64 prefix is assigned to the specific access node. However, for explanatory purposes a dedicated header field with a length of 112 bits is assumed in the following exemplary part of this description as depicted in Figure 10 which shows a known encoding approach. Today, often VLAN tags are used for tunneling the subscriber's access line traffic to the BNG. Assuming that every subscriber line hosts at maximum a single subscriber, this approach limits the number of subscribers per access node to the number of VLAN ID which is a field of 12 bits. This means, that a single value $\in \{1...4096\}$ is sufficient to identify a subscriber.

However, the set of values for the VLAN ID (2^12) contains more than 112 values. Encoding these values with the much smaller 112-bit value field is achieved by splitting the bit field into an offset value that is interpreted as a number and a bit field that is interpreted as such. Each bit in the bit field of a packet header then encodes the bit in the target bit field as calculated: offset * (2^subset_bitlength) + bit_field_no. The advantage of this approach is that a much larger bit field can be encoded in a reasonably sized per packet header. The disadvantage is that the BNG has to create multiple copies of the packet. The encoding is depicted in Figure 10, which has already been described in the literature before, e.g. in US 2016/134518 A1.

The bit-string lengths *BL* depends on the values that need to be encoded. Each packet has to include an encoding of a subset of the bit-string; it does so by using a field with a length of *HL* bits. The first *SL* bits of the *HL* are used to identify the offset of the subset that is encoded. The last *HL* - *SL* = *FL* bits in the header are used to encode individual bits.

The efficiency of the selected *FL* depends on its lengths relative to the *HL*. The reason for this is that in the worst case, *BL*/*FL* copies of the packet have to be created on the SE. Therefore, for each header length bit-string length the optimal subset length is calculates as follows:

minimize (SL) subject to:

$$2^{SL} \geq \frac{BL}{FL}$$

$$HL = SL + FL$$

For explanatory purposes, a 128-bit header will be used in the following description, which contains the packet template ID field, a subset length field, a next protocol field, and the bit index header as depicted in Figure 11.

The packet template ID refers to the packet template that should be applied to the subsequent header fields. The subset length field denotes the number of bits of the bit index header that should be used to encode the offset of the following bit string. Finally, the next protocol field encodes the Ethernet compatible protocol ID of the next header field in the packet. To ensure that the additional header of 16 bytes does not increase the size of the multicast packet above the MTU and the network connection between the MTS and the MTR should use an MTU of more than 1600 bytes.

Two approaches can be used to implement the desired behavior: encoding the PPPoE Session ID directly or encoding the VLAN ID of the customer. The first approach has the advantage that no additional state is required on the access node. The second approach encodes the VLAN ID, which is smaller and thus can be encoded more efficiently in the 128-bit header. The number of worst-case replications on the Service Edge per multicast group is reduced to 46-47 per connected access node in this case.

## Summary of the invention

This invention describes a method of optimizing the disaggregation of the multicast control signaling and user plane replication by using bit-indexed replication and packet templates to implement ad-hoc, in-band signaling that forgoes dynamic, per multicast group state on the access node.

Thereby, the access node is relieved from multicast control signaling and form parsing additional tunneling protocols that are used between the RG and the MTS, enabling more cost-efficient hardware designs. At the same time, the multicast transmission efficiency is increased and the packet duplication requirements for the MTS are reduced. In other words, the present invention has the following advantages over the existing systems and methods:

i) Enable multicast-replication on the access node with arbitrary access tunnel protocols.

ii) Thereby increasing the multicast transmission, which is especially important for future high-bandwidth 4k streaming services.

iii) The access node is relieved from dynamic multicast group control signaling.

The problem of multicast control communication is solved as by using generic packet templates that are instantiated for every multicast recipient. The system is aimed to be used in an ISP access network scenario, but can be used in other environments as well. Therefore, in contrast to the examples used throughout the invention, in this generic description, generic terms will be used to identify the Multicast Traffic Sender, MTS, (i.e. a Broadband Network Gateway, BNG, in some examples) and the Multicast Traffic Replicator, MTR, (i.e. an Access Node, AN, in some examples). Each MTS may be connected to multiple MTRs.

These objects are achieved with the features of the independent claim.

A method for controlling signaling overhead in an access network, with separated multicast control and user planes by switch from per group member signaling to per multicast user signaling, the access network comprising at least one Multicast Traffic Sender, MTS, and at least one Multicast Traffic Replicator, MTR, the method comprising:

a) creating, at the MTS, a Multicast Packet Template, MPT, for each type of traffic that is forwarded, wherein each MPT comprises at least: a unique ID for the MPT and a list of variables that are used for every copy of each multicast packet;
b) accepting, by the MTR, the MPT if the ID is not used yet and the list of variables specified in the MPT are available, and sending to the MTS a corresponding message that the MPT has been accepted;
c) creating, at the MTR, a template instance for each MPT that has been accepted, wherein for each intended receiver of the multicast traffic a template instance is created, and wherein each instance includes: the MPT ID, the bit index used to encode the receiver in the MPT header and a value for each variable created in the MPT;
d) verifying, at the MTS that all values of the MPT are acceptable;
e) storing the MPT instance on the MTR in a data store;
f) enabling multicast traffic between the MTS and the MTR;
g) sending, from the MTS to each MTR that is connected to it, the required number of packet copies so that every receiver bit index is encoded exactly once in any of the sent packet copies, and wherein each packet copy encapsulates the packet that should be send to the receiver in a MPT header and sends it to the MTR in an appropriate encapsulation.

In the method, each MTS might be connected to multiple MTRs.

The MTS may maintain a list of multicast receivers, their bit index and the MTRs where they are connected.

Each MPT may further comprise: a total bit strength length that is the number of multicast receivers that can be addressed, a bit header length per packet which is the number of bits used in the MPT header to encode multicast receivers, and a bit subset length.

In the list of variables of each MPT, each variable may: specify a value length in bytes or bits and a destination, wherein some variables are written into the packet at a predefined offset and others are used as a system variable.

The MTS may be a Broadband Network Gateway, BNG, and/or the MPR is an Access Node, AN.

The data store of the MTR may be accessed through its template ID and bit index.

The method may further comprise the following steps at the MTR:

h) when the packet arrives, identifying the packet to be handled by the existence of the MPT header in the packet;
i) extracting the MPT ID and looking up to check if the corresponding template exists, wherein in case of existence of the corresponding template, the receiver bit indexes are extracted from the bit header;
j) iterating through the list of bit indexes and performing a look up in the MPT Instance data store if the corresponding instance is available, wherein in case the instance is available, creating a copy of the MPT header payload and substituting the variable values as defined in the template and sending the packet copy to a receiver or user connected to the MTR, wherein this process is repeated until all bit indexes have been looked up, wherein in case one of the bit indexes cannot be matched with the MPT instance list or the MPT ID does not exist, generating an error message and sending it to the originating MTS of the packet.

Then, steps h) to j) may be repeated until the MTS receives a request, from the receiver or user, for leaving the multicast group, in which case its bit is removed from the corresponding MPT header.

Further, when the client is disassociated from the MTS, the method further comprises the steps of: signaling, from the MTS to the MTR, to remove the corresponding MPT instance, and deleting, at both the MTR and MTS, the MPT and all its corresponding instances.

The two major contributions of the invention are: 1) The MTR does not inject the PPPoE (or any other tunnelling protocol) header to media data packets. Instead, packet templates are used where the packets sent from the MTS to the MTR that transport multicast media data already include a PPPoE (or any other tunnelling protocol) header. The MTR only has to write the destination MAC address and PPPoE session ID (or any other set of values) into each outgoing packet. The former is supported by layer 2 devices anyways; the latter requires writing a value to a fixed header offset location, which can be done without requiring full PPPoE (or any other tunnelling protocol) parsing and de-parsing support on the MTR; and 2) After the user or receiver joined a multicast group, no further signalling is required between the MTR and the MTS. Instead, packets sent from the MTS to the MTR that transport multicast media data include an additional header that carries all information required by the MTR to conduct the multicast processing. The approach introduces a new packet header that carries the replication information that the MTR has to process. The MTR control plane can be reduced to minimum functionality.

In other words, the present invention: reduces the multicast control signalling on the MTR while including the access node in the multicast replication process, reduces the multicast state held on the access node and reduces the multicast packet processing requirements on the access node while processing multicast with PPPoE encapsulation.

## Detailed description of the invention

A method for controlling signaling overhead in an access network, with separated multicast control and user planes by switch from per group member signaling to per multicast user signaling, the access network comprising at least one Multicast Traffic Sender, MTS, and at least one Multicast Traffic Replicator, MTR.

## Brief description of the drawings

In the drawings:

FIG. 1 is an example of a Residential network access.
FIG. 2 illustrates the state of the art for implementing multicast services in residential access networks, when multicast processing is on the BNG only.
FIG. 3 illustrates the state of the art for implementing multicast services in residential access networks, when multicast processing is on the BNG and the AN.
FIG. 4 illustrates the state-of-the-art approaches.
FIG. 5 illustrates the sequence diagram of the new approach for implementing multicast services in residential access networks.
FIG. 6 illustrates an example of a subscriber joining a multicast group in the proposed design.
FIG. 7 illustrates the header stack processing in the proposed design.
FIG. 8 illustrates an example of the PPPoE session header format.
FIG. 9 illustrates an example of Multicast Packet Template signalling messages.
FIG. 10 illustrates an example of the encoding of the per-header bit field.
FIG. 11 illustrates a Multicast Packet Template header format.

First, the MTS, creates a Multicast Packet Template, MPT, for each type of traffic that is to be forwarded. The encoding of the message is not specified, but could be, for example, JSON or any other suitable encoding. The required information for this template is: a unique ID for the MPT and a list of variables that are used for every copy of each multicast packet.

Each variable specifies a value length in bytes or bits, and a destination, i.e. how the variable value is used for each copy. Supported destinations should be "packet" and "system". Required fields:

- "Packet": offset: the offset in the duplicated packet where the value is written to
- "System": usage: the system variable the value is used for. Could be for example an interface ID where the packet is sent to. The available values depend on the actual system implementation.

Said variables of the MPT may contain: the total bit string length, which is the number of multicast receivers that can be addressed; the bit header length per packet, i.e. the number of bits used in the packet template header to encode multicast receivers; the bit subset length, i.e. part of the bit header that is used to denote the offset for the bit sequence.

The MTR accepts the MPT if the ID is not used yet and the list of variables specified in the MPT are available, e.g. the system variables specified by the request are available. Then, the MTR sends to the MTS a corresponding message that the MPT has been accepted.

Now instances for the MPT can be created. For each intended receiver of the multicast traffic, a template is created. Per instance the following information is required: the MPT ID, the bit index used to encode the receiver in the MPT header and a value for each variable created in the MPT.

Again, the MTS verifies that all values of the MPT are acceptable, i.e. if an MPT with the given ID exist and that for every variable declared there, a corresponding value is provided in the correct range.

Then, the MPT Instance is stored on the MTR in a data store. Said instance might be accessible through its template ID and bit index.

Now, multicast traffic can be transmitted. Preferably, the MTS maintains a list of multicast receivers, their bit index and the MTRs where they are connected. Multicast traffic is enabled between the MTS and the MTR. The MTS sends to each MTR that is connected to it, the required number of packet copies so that every receiver bit index is encoded exactly once in any of the sent packet copies. Further, each packet copy encapsulates the packet that should be send to the receiver in an MPT header (see Figure 11) and sends it to the MTR in an appropriate encapsulation, the latter might, for example, a single Ethernet header, or any other transport encoding, e.g. MPLS or Segment Routing.

Once the packet arrives at the MTR, it is identified to be handled by the existence of the MPT header in the packet. The MPT ID is then extracted and a look up is performed to check if the corresponding template exists. If this is the case, the receiver bit indexes are extracted from the bit header of the MPT.

The MTR iterates through the list of bit indexes and performs a look up in the MPT Instance data store if the corresponding instance is available. If it is, it creates a copy of the MPT header payload and substitutes the variable values as defined in the template. A packet copy is then sent to a receiver or user connected to the MTR. This process is repeated until all bit indexes have been looked up. In case one of the bit indexes cannot be matched with the MPT instance list or the MPT ID does not exist, an error message is generated and sent to the originating MTS of the packet.

This process is repeated until the MTS determines (through the receiver's request or otherwise) that the receiver should leave the multicast group, in which case its bit is removed from the corresponding MPT header. No further signaling with the MTR is required.

If the client is disassociated from the MTS, the MTS signals the MTR, to remove the corresponding MPT instance.

Finally, one the type of multicast traffic is not needed any more, the MPT is deleted upon request of the MTS and with it all corresponding instances.

The system and method for control signaling overhead in an access network of the present invention improves the state-of-the-art in multiple ways. The multicast signaling is processed on the Multicast Traffic Sender, MTS (i.e. a Broadband Network Gateway for example) node only, while the multicast packet duplication load is shared between the MTS and the Multicast Traffic Replicator, MTR (i.e. an Access node for example). The traffic is transmitted using the PPPoE protocol or in any arbitrary other encapsulations. However, the multicast processing on the access node does not require special PPPoE parsing capabilities, writing a value into a fixed offset is sufficient (which is supported by many commercial off-the-shelf (COTS) switch ASIC designs today). Finally, no additional or specialized device is required.

Figure 5 depicts an example sequence diagram of the present invention. The following abbreviations are used to increase the readability of this section: RG S1 refers to Residential Gateway, namely the user or receiver; the MTR is an Access Node (AN); the MTS is a Broadband Network Gateway (BNG); and the Media Source (MS) is in the origin of multicast groups and their network traffic. In order to distinguish steps of the present invention with those already known, the parts of the invention appear in Figure 5 in black, whereas in grey there are depicted the steps or parts already known.

First, the MS signals the BNG that multicast traffic is enabled. Then, the BNG creates a Packet Template and the corresponding variables. After this, a tunnel is established between the BNG and the AN, by signaling, from the BNG to the AN, a line ID (L1) of the RG S1.

Next, the BNG configures the multicast processing, by the verification of the subscriber with the MS and the Service Parameters are gotten. Here, at the AN, a template instance for each MPT is created, wherein each instance includes various parameters, such as a Template ID and a bit index, inter alia. After this, the line L1 is enabled and the PPPoE session is established, i.e. the PPPoE Session setup is complete between the RG S1 and the BNG.

Once the PPPoE is established, the subscriber (RG S1) joins a multicast group by sending an IGMP message to the BNG. The BNG processes it, joins the corresponding group with the media source if necessary, and finally sets up the multicast processing, thereby allowing for the transmission of multicast data packets.

Later, when the user decides to leave the group, the RG S1 sends the corresponding IGMP message to the BNG to leave the multicast group. At the BNG, the RG S1 is removed from the multicast group. Afterwards, the BNG notifies the AN to remove the corresponding MPT instance and, finally, deletes, both at the AN and the BNG, the MPT and all its corresponding instances.

The main difference in this approach is that when a subscriber (RG S1 in the figure) establishes a PPPoE session and subscribed to the multicast service, the BNG signals the access node not only the Line ID of the subscribed and how to establish a tunnel for this line between the access node and the BNG but also configures the multicast processing. This is done by assigning the line ID (L1 in the figure) a bit ID that is unique for the subscribed on this access node and associates it with the MAC address of the RG and the PPPoE session ID. This signaling is the only multicast signaling required to involve the AN in the packet duplication.

Figure 7 depicts an example of PPPoE packet header processing of the present invention. When the subscriber joins a group as depicted in Figure 6, it sends an IGMP message to the BNG. The BNG processes it, joins the corresponding group with the media source if necessary, and sets up the multicast processing. This is done by adding the subscribers bit ID to the set of the receivers of this group on this specific access node. For each packet addressed to this multicast group, a copy is created for each addresses access node and an additional multicast bit header is added as depicted in Figure 7. The details of the bit string encoding are described later. However, as this specific encoding has been described in literature before, it is not described in detail here.

Furthermore, a PPPoE header is added to the packet. The result of the approach is that multicast packets arrive at the access node containing a PPPoE header and a list of subscribed IDs that are encoded as a bit string. The AN maintains a mapping from bit IDs to line IDs and MAC address and the PPPoE session ID are written to predefined offsets of the packet. The access node does not have to decode or fully parse the PPPoE protocol, matching bit IDs is sufficient for this process. Existing publications have shown that this is possible with e.g. OpenFlow, which is disclosed in: A. Giorgetti et. al "First Demonstration of SDN-based Bit Index Explicit Replication (BIER) multicasting", In European Conference on Networks and Communications (EuCNC), 2017. The messages exchanged in this process are listed in Figure 9.

The described approach of the present invention is especially useful to reduce the complexity of the MTR. For example, OLT could be build using an FPGA without requiring an additional switch chip.

## Claims

1. A method for controlling signaling overhead in an access network, the access network comprising: at least one Multicast Traffic Sender, MTS; at least one Multicast Traffic Replicator, MTR; and at least one multicast traffic receiver, by separating multicast control plane and multicast user plane processing and by switching from per group member signaling to per multicast user signaling on the MTR, the method comprising the steps of:

   a) creating, at the MTS, a Multicast Packet Template, MPT, for each type of traffic that is forwarded, wherein each MPT comprises at least: a unique ID for the MPT and a list of variables that are used for every copy of each multicast packet;
   b) accepting, by the MTR, the MPT if the ID is not used yet and the list of variables specified in the MPT are available, and sending to the MTS a corresponding message that the MPT has been accepted;
   c) creating, at the MTR, a template instance for each MPT that has been accepted, wherein for each intended multicast traffic receiver a template instance is created, and wherein each instance includes: the MPT ID, a bit index used to encode the multicast traffic receiver in the MPT header and a value for each variable created in the MPT;
   d) verifying, at the MTS that all values of the MPT are acceptable;
   e) storing the MPT instance on the MTR in a data store;
   f) enabling multicast traffic between the MTS and the MTR;
   g) sending, from the MTS to each MTR that is connected to it, the required number of packet copies so that every bit index is encoded exactly once in any of the sent packet copies, and wherein each packet copy encapsulates the packet that should be send to the multicast traffic receiver in an MPT header and sends it to the MTR in an appropriate encapsulation.

2. The method of claim 1, wherein each MTS can be connected to multiple MTRs.

3. The method of claim 2, wherein the MTS maintains a list of multicast traffic receivers, their bit index and the MTRs where they are connected.

4. The method of any of claims 1 to 3, wherein each MPT further comprises:

   a total bit strength length that is the number of multicast traffic receivers that can be addressed,
   a bit header length per packet which is the number of bits used in the MPT header to encode multicast traffic receivers, and
   a bit subset length.

5. The method of any of claims 1 to 4, wherein in the list of variables of each MPT, each variable specifies a value length in bytes or bits and a destination, and wherein some variables are written into the packet at a predefined offset and others are used as a system variable.

6. The method of any of claims 1 to 5, wherein the MTS is a Broadband Network Gateway, BNG, and/or the MTR is an Internet Service Provider, ISP, Access Node, AN.

7. The method of any of claims 1 to 6, wherein the data store of the MTR can be accessed through its template ID and bit index;

8. The method of claim 6, further comprising the following steps at the MTR:

   h) when the packet arrives, identifying the packet to be handled by the existence of the MPT header in the packet;
   i) extracting the MPT ID and looking up to check if the corresponding template exists, wherein in case of existence of the corresponding template, the multicast traffic receiver bit indexes are extracted from the bit header;
   j) iterating through the list of bit indexes and performing a look up in the MPT Instance data store if the corresponding instance is available, wherein in case the instance is available, creating a copy of the MPT header payload and substituting the variable values as defined in the template and sending the packet copy to a multicast traffic receiver or user connected to the MTR, wherein this process is repeated until all bit indexes have been looked up, wherein in case one of the bit indexes cannot be matched with the MPT instance list or the MPT ID does not exist, generating an error message and sending it to the originating MTS of the packet.

9. The method of claim 8, wherein steps h) to j) are repeated until the MTS receives a request, from the multicast traffic receiver or user, for leaving the multicast group, in which case its bit is removed from the corresponding MPT header.

10. The method of claim 9, wherein when the client is disassociated from the MTS:

   signaling, from the MTS to the MTR, to remove the corresponding MPT instance;

deleting, at both the MTR and MTS, the MPT and all its corresponding instances.

## Patentansprüche

1. Verfahren zum Steuern des Signalisierungs-Overheads in einem Zugangsnetzwerk, wobei das Zugangsnetzwerk aufweist: mindestens einen Multicast-Verkehr-Sender, MTS; mindestens einen Multicast-Verkehr-Replikator, MTR; und mindestens einen Multicast-Verkehr-Empfänger, durch Trennen der Verarbeitung der Multicast-Steuerungsebene und Multicast-Benutzerebene und durch Umschalten einer Signalisierung pro Gruppenmitglied auf eine Signalisierung pro Multicast-Benutzer auf dem MTR, wobei das Verfahren die Schritte aufweist:

    a) Erzeugen am MTS einer Multicast-Paketvorlage, MPT, für jeden Typ Verkehr, der weitergeleitet wird, wobei jede MPT mindestens aufweist: eine eindeutige ID für die MPT und eine Liste von Variablen, die für jede Kopie jedes Multicast-Pakets verwendet werden;
    b) Akzeptieren durch den MTR der MPT, wenn die ID noch nicht verwendet wird und die Liste der in der MPT spezifizierten Variablen verfügbar ist, und Senden einer entsprechenden Nachricht an den MTS, dass die MPT akzeptiert worden ist;
    c) Erzeugen am MTR einer Vorlageninstanz für jede MPT, die akzeptiert worden ist, wobei für jeden beabsichtigten Multicast-Verkehr-Empfänger eine Vorlageninstanz erzeugt wird und wobei jede Instanz aufweist: die MPT-ID, einen Bit-Index, der verwendet wird, um den Multicast-Verkehr-Empfänger im MPT-Header zu codieren, und einen Wert für jede im MPT erzeugte Variable;
    d) Verifizieren am MTS, dass alle Werte des MPT akzeptabel sind;
    e) Speichern der MPT-Instanz auf dem MTR in einem Datenspeicher;
    f) Ermöglichen von Multicast-Verkehr zwischen dem MTS und dem MTR;
    g) Senden vom MTS an jeden MTR, der mit ihm verbunden ist, der erforderlichen Anzahl von Paketkopien, so dass jeder Bit-Index genau einmal in jeder der gesendeten Paketkopien codiert wird, und wobei jede Paketkopie das Paket, das an den Multicast-Verkehr-Empfänger gesendet werden sollte, in einem MPT-Header einkapselt und es an den MTR in einer geeigneten Einkapselung sendet.

2. Verfahren nach Anspruch 1, wobei jeder MTS mit mehreren MTRs verbunden sein kann.

3. Verfahren nach Anspruch 2, wobei der MTS eine Liste von Multicast-Verkehr-Empfängern, ihren Bit-Index und die MTRs unterhält, mit denen sie verbunden sind.

4. Verfahren nach einem der Ansprüche 1 bis 3, wobei jede MPT ferner aufweist:

    eine Gesamtbitstärkenlänge, die die Anzahl der Multicast-Verkehr-Empfänger ist, die adressiert werden können,
    eine Bitheaderlänge pro Paket, die die Anzahl der Bits ist, die in dem MPT-Header verwendet werden, um Multicast-Verkehr-Empfänger zu codieren, und
    eine Bit-Teilmengenlänge.

5. Verfahren nach einem der Ansprüche 1 bis 4, wobei in der Liste der Variablen jeder MPT jede Variable eine Wertlänge in Bytes oder Bits und ein Ziel spezifiziert, und
wobei einige Variablen an einem vordefinierten Offset in das Paket geschrieben werden und andere als Systemvariable verwendet werden.

6. Verfahren nach einem der Ansprüche 1 bis 5, wobei der MTS eine Breitband-Netzwerk-Gateway, BNG, ist und/oder der MTR ein Zugangsknoten AN eines Internetdienstanbieters, ISP, ist.

7. Verfahren nach einem der Ansprüche 1 bis 6, wobei auf den Datenspeicher des MTR über seine Vorlagen-ID und seinen Bit-Index zugegriffen werden kann.

8. Verfahren nach Anspruch 6, das ferner die folgenden Schritte am MTR aufweist:

    h) wenn das Paket ankommt, Identifizieren des zu handhabenden Pakets durch das Vorhandensein des MPT-Headers im Paket;
    i) Extrahieren der MPT-ID und Nachschlagen, um zu prüfen, ob die entsprechende Vorlage vorhanden ist, wobei im Fall des Vorhandenseins der entsprechenden Vorlage die Multicast-Verkehr-Empfänger-Bitindizes aus dem Bitheader extrahiert werden;
    j) Iterieren durch die Liste der Bitindizes und Durchführen eines Nachschlagens im MPT-Instanz-Datenspeicher, wenn die entsprechende Instanz verfügbar ist, wobei, falls die Instanz verfügbar ist, Erzeugen einer Kopie der MPT-Header-Nutzdaten und Ersetzen der Variablenwerte, wie in der Vorlage definiert, und Senden der Paketkopie an einen Multicast-Verkehr-Empfänger oder Benutzer, der mit dem MTR verbunden ist, wobei dieser Prozess wiederholt wird, bis alle Bitindizes nachgeschlagen worden sind, wobei, falls einer der Bitindizes nicht mit der MPT-Instanzliste abgeglichen werden kann oder die MPT-ID nicht vorhanden ist, Erzeugen einer Fehlermeldung und Senden dieser an den Ursprungs-MTS des Pakets.

**9.** Verfahren nach Anspruch 8, wobei die Schritte h) bis j) wiederholt werden, bis das MTS eine Anforderung vom Multicast-Verkehr-Empfänger oder Benutzer zum Verlassen der Multicast-Gruppe empfängt, wobei in diesem Fall sein Bit aus dem entsprechenden MPT-Header entfernt wird.

**10.** Verfahren nach Anspruch 9, wobei, wenn der Client vom MTS getrennt wird: Signalisieren vom MTS an den MTR, die entsprechende MPT-Instanz zu entfernen; Löschen sowohl am MTR als auch am MTS der MPT und aller ihrer entsprechenden Instanzen.

## Revendications

**1.** Procédé de régulation d'un surdébit de signalisation dans un réseau d'accès, ledit réseau d'accès comprenant : au moins un expéditeur de trafic de multidiffusion, MTS ; au moins un réplicateur de trafic de multidiffusion, MTR ; et au moins un récepteur de trafic de multidiffusion, par séparation de traitement de plan de commande de multidiffusion et de plan d'utilisateur de multidiffusion et par commutation d'une signalisation par membre de groupe à une signalisation par utilisateur de multidiffusion sur le MTR, ledit procédé comprenant les étapes suivantes :

a) création, au niveau du MTS, d'un modèle de paquet de multidiffusion, MPT, pour chaque type de trafic transmis, chaque MPT comprenant au moins : un ID unique pour le MPT et une liste de variables utilisées pour chaque copie de chaque paquet de multidiffusion ;
b) acceptation, par le MTR, du MPT si l'ID n'est pas encore utilisé et la liste de variables spécifiées dans le MPT est disponible, et envoi au MTS d'un message correspondant selon lequel le MPT a été accepté ;
c) création, au niveau du MTR, d'une instance de modèle pour chaque MPT ayant été accepté, où, pour chaque récepteur de trafic de multidiffusion prévu, une instance de modèle est créée, et où chaque instance comprend: l'ID de MPT, un index binaire utilisé pour coder le récepteur de trafic de multidiffusion dans l'en-tête MPT et une valeur pour chaque variable créée dans le MPT ;
d) vérification, au niveau du MTS, que toutes les valeurs du MPT sont acceptables ;
e) mémorisation de l'instance de MPT sur le MTR dans un magasin de données ;
f) activation du trafic de multidiffusion entre le MTS et le MTR ;
g) envoi, du MTS à chaque MTR qui lui est connecté, du nombre de copies de paquet exigé de sorte que chaque index binaire soit codé précisément une fois dans toutes les copies de paquet envoyées, et chaque copie de paquet encapsulant le paquet devant être envoyé au récepteur de trafic de multidiffusion dans un entête MPT et envoyant celui-ci au MTR dans une encapsulation appropriée.

**2.** Procédé selon la revendication 1, où chaque MTS peut être connecté à plusieurs MTR.

**3.** Procédé selon la revendication 2, où le MTS entretient une liste de récepteurs de trafic de multidiffusion, leur index binaire et les MTR où ils sont connectés.

**4.** Procédé selon l'une des revendications 1 à 3, où chaque MPT comprend en outre :

une longueur binaire étirée totale, qui est le nombre de récepteurs de trafic de multidiffusion pouvant être adressés,
une longueur binaire d'en-tête par paquet, qui est le nombre de bits utilisés dans l'en-tête MPT pour coder des récepteurs de trafic de multidiffusion, et
une longueur de sous-ensemble de bits.

**5.** Procédé selon l'une des revendications 1 à 4, où dans la liste de variables de chaque MPT, chaque variable spécifie une taille de valeur en octets ou en bits et une destination, et où quelques variables sont écrites dans le paquet suivant un décalage défini et où les autres sont utilisées comme variables système.

**6.** Procédé selon l'une des revendications 1 à 5, où le MTS est une passerelle de réseau à large bande, BNG, et/ou le MTR est un noeud d'accès AN à un fournisseur d'accès Internet, ISP.

**7.** Procédé selon l'une des revendications 1 à 6, où il est possible d'accéder au magasin de données du MTR par son ID de modèle et index binaire ;

**8.** Procédé selon la revendication 6, comprenant en outre les étapes suivantes au niveau du MTR:

h) lorsque le paquet arrive, identification du paquet à traiter par existence de l'en-tête MPT dans le paquet ;
i) extraction de l'ID de MPT et recherche pour vérifier si le modèle correspondant existe, où, en cas d'existence du modèle correspondant, les index binaires de récepteur de trafic de multidiffusion sont extraits de l'en-tête de bits ;
j) itération à travers la liste d'index binaires et exécution d'une recherche dans le magasin de données d'instances de MPT si l'instance correspondante est disponible, où, en cas de disponibilité de l'instance, une copie de la charge utile d'en-tête MPT est créée et les valeurs de variables telles que définies dans le modèle sont substituées, et envoi de la copie de paquet à un récepteur de trafic de multidiffusion ou utilisateur connecté au MTR, ce processus étant répété jusqu'à ce que tous les index binaires aient été consultés, où, au cas où un des index binaires ne peut pas être mis en correspondance avec la liste d'instances de MPT ou que l'ID de MPT est inexistante, un message d'erreur est généré et envoyé au MTS à l'origine du paquet.

**9.** Procédé selon la revendication 8, où les étapes h) à j) sont répétées jusqu'à ce que le MTS reçoive une demande du récepteur de trafic de multidiffusion ou de l'utilisateur, pour quitter le groupe de multidiffusion, auquel cas son bit est supprimé de l'en-tête MPT correspondant.

**10.** Procédé selon la revendication 9, où, lorsque le client est dissocié du MTS : signalisation, du MTS au MTR, de supprimer l'instance de MPT correspondante ; suppression, au niveau de MTR ainsi que du MTS, du MPT et de toutes ses instances correspondantes.

# Figure 1

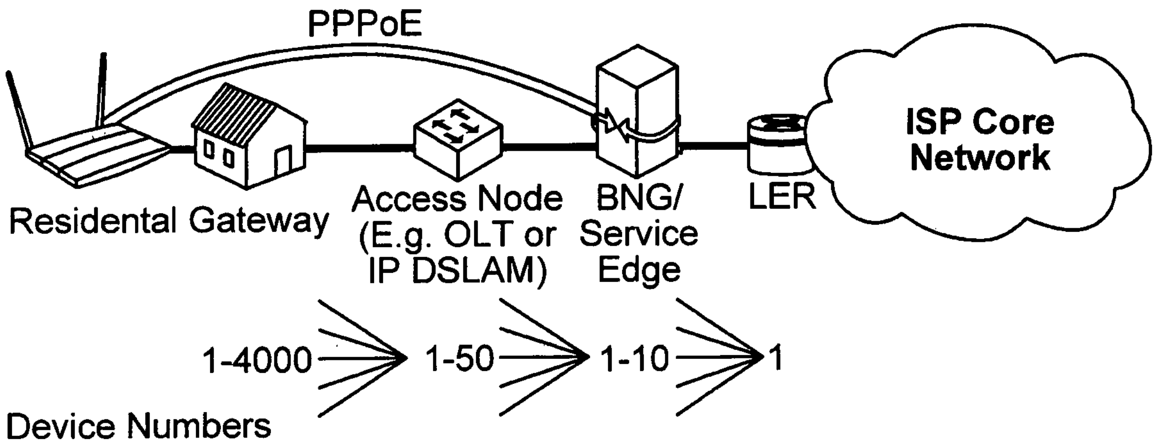
PPPoE
ISP Core Network
Residental Gateway
Access Node (E.g. OLT or IP DSLAM)
BNG/ Service Edge
LER
1-4000
1-50
1-10
1
Device Numbers

# Figure 2

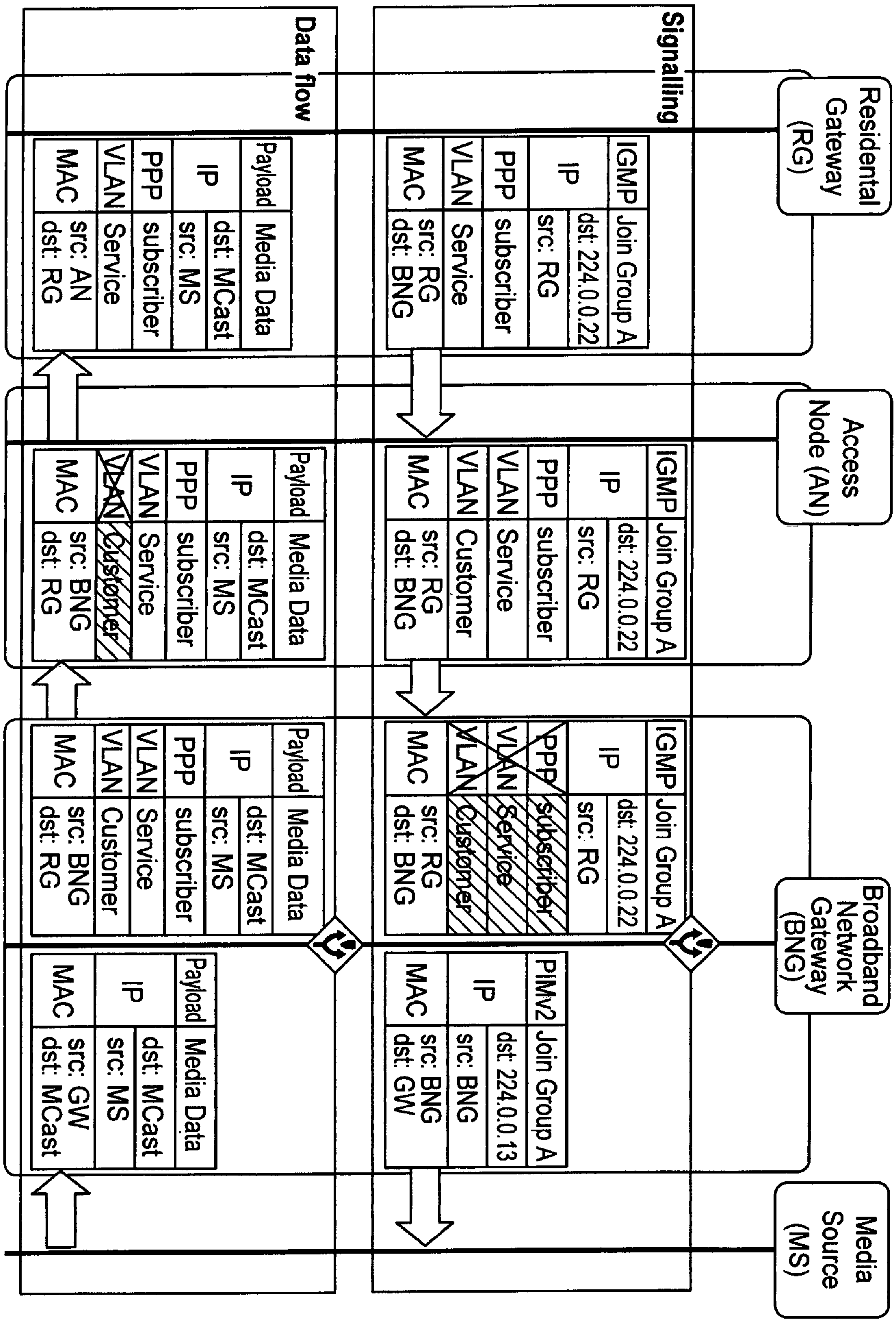

Residental Gateway (RG)
Access Node (AN)
Broadband Network Gateway (BNG)
Media Source (MS)
Signalling
Data flow
IGMP Join Group A
IP dst: 224.0.0.22 src: RG
PPP subscriber
VLAN Service
VLAN Customer
MAC src: RG dst: BNG
PIMv2 Join Group A
IP dst: 224.0.0.13 src: BNG
MAC src: BNG dst: GW
Payload Media Data
IP dst: MCast src: MS
MAC src: AN dst: RG
MAC src: BNG dst: RG
MAC src: GW dst: MCast

# Figure 3

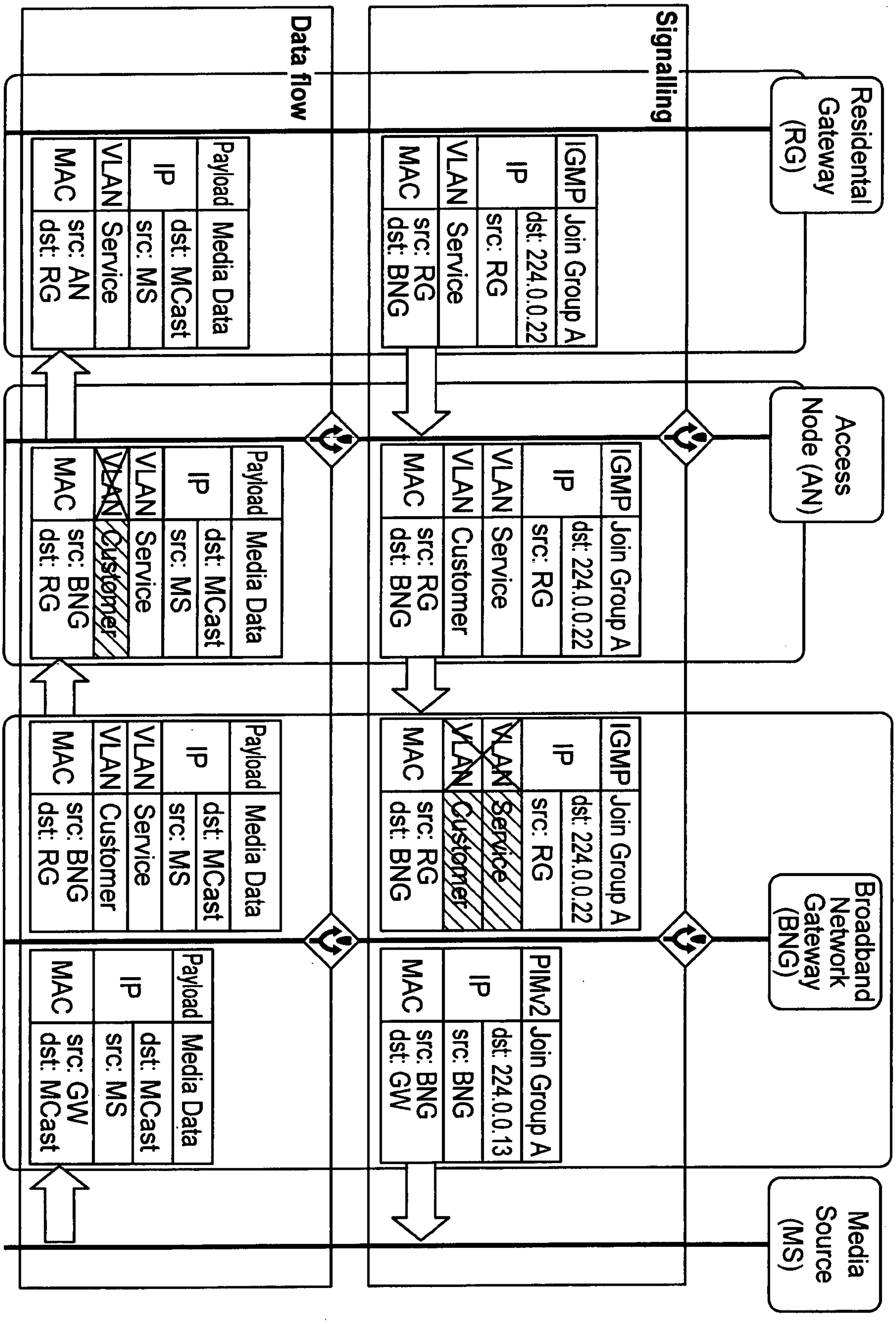
Residental Gateway (RG)
Access Node (AN)
Broadband Network Gateway (BNG)
Media Source (MS)
Signalling
Data flow
IGMP Join Group A
IP dst: 224.0.0.22 src: RG
VLAN Service
VLAN Customer
MAC src: RG dst: BNG
PIMv2 Join Group A
IP dst: 224.0.0.13 src: BNG
MAC src: BNG dst: GW
Payload Media Data
IP dst: MCast src: MS
MAC src: GW dst: MCast
MAC src: BNG dst: RG
MAC src: AN dst: RG

# Figure 4

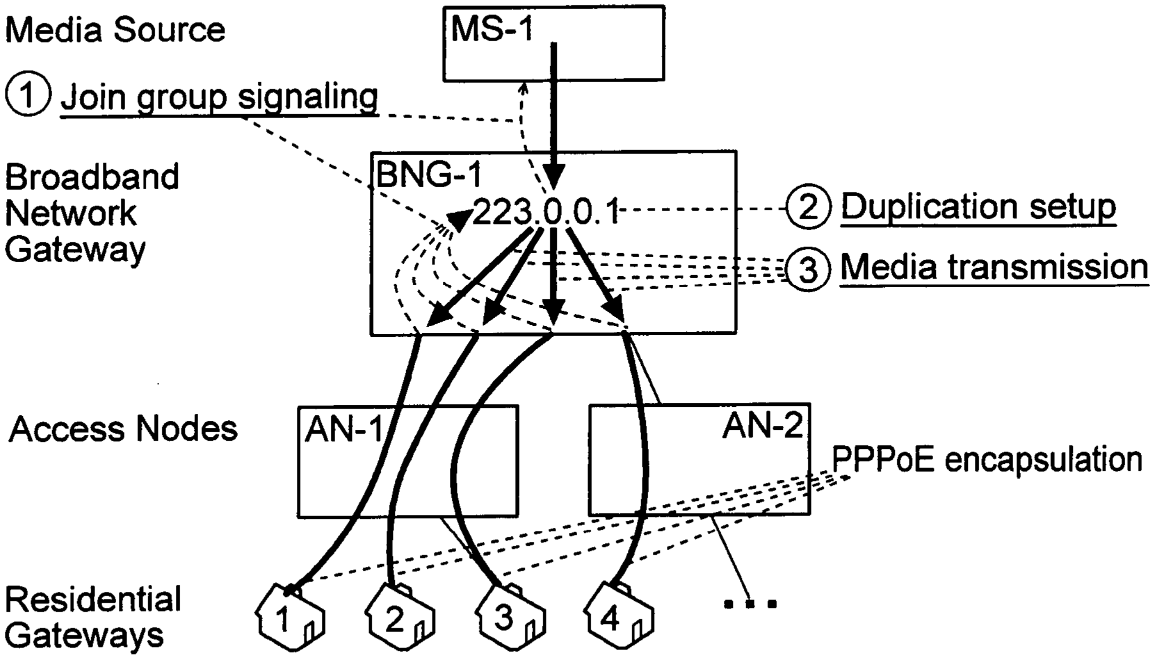


Figure 4.a

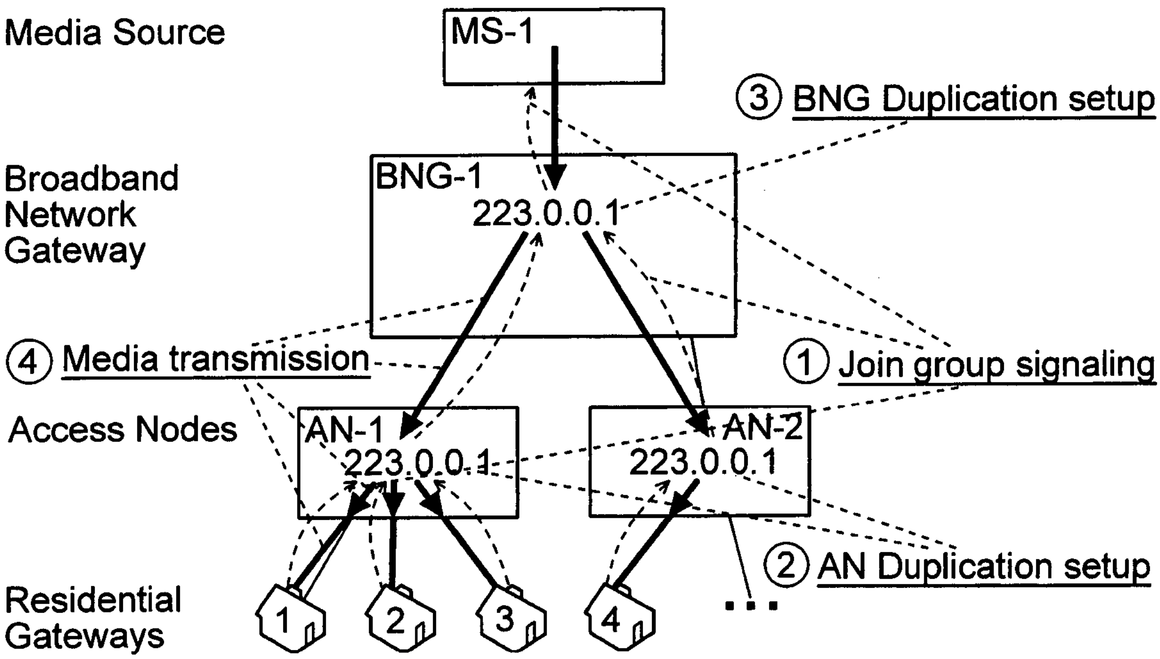


Figure 4.b

# Figure 5

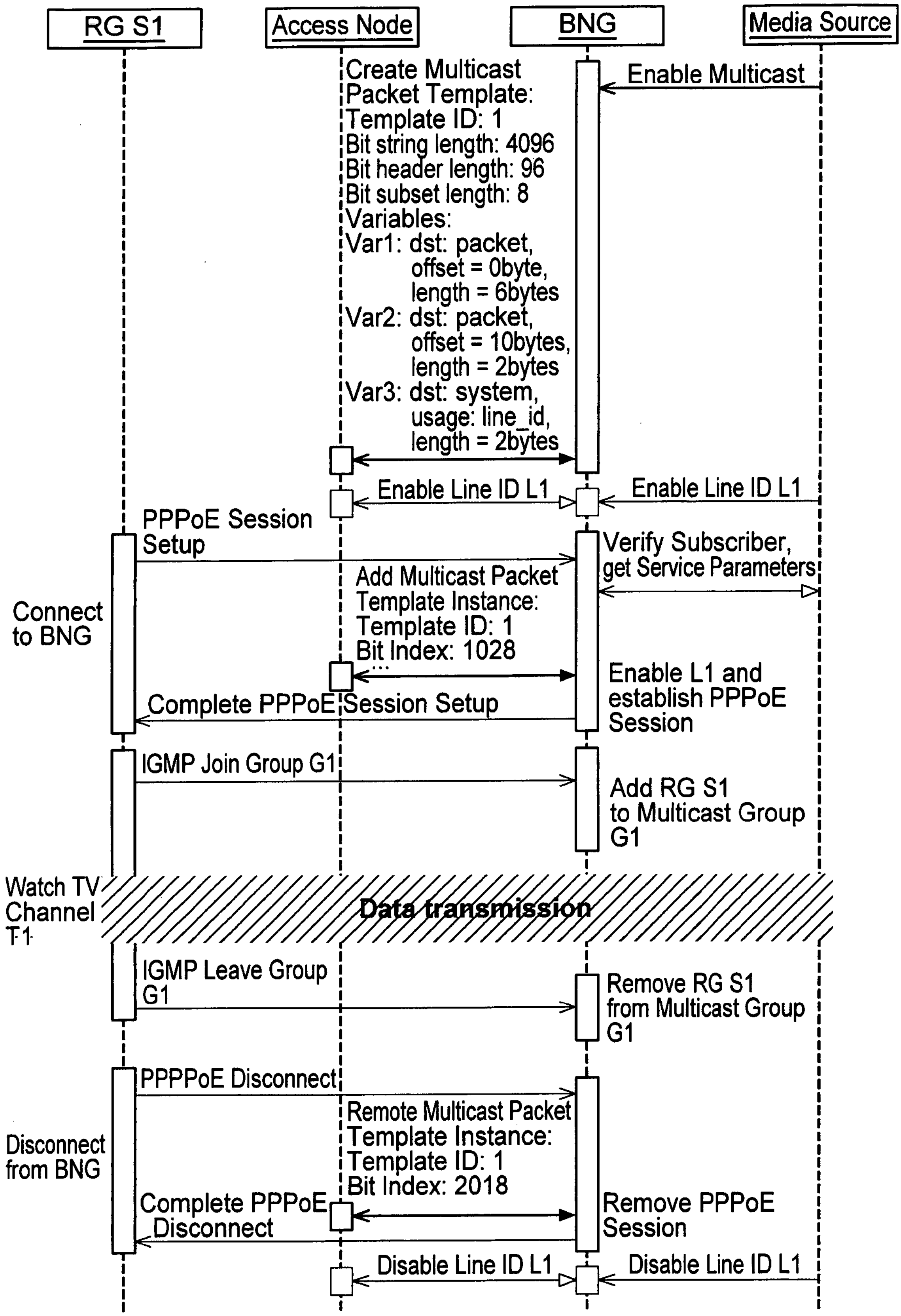

RG S1
Access Node
BNG
Media Source
Enable Multicast
Create Multicast Packet Template:
Template ID: 1
Bit string length: 4096
Bit header length: 96
Bit subset length: 8
Variables:
Var1: dst: packet, offset = 0byte, length = 6bytes
Var2: dst: packet, offset = 10bytes, length = 2bytes
Var3: dst: system, usage: line_id, length = 2bytes
Enable Line ID L1
Enable Line ID L1
PPPoE Session Setup
Verify Subscriber, get Service Parameters
Connect to BNG
Add Multicast Packet Template Instance:
Template ID: 1
Bit Index: 1028
...
Enable L1 and establish PPPoE Session
Complete PPPoE Session Setup
IGMP Join Group G1
Add RG S1 to Multicast Group G1
Watch TV Channel T1
Data transmission
IGMP Leave Group G1
Remove RG S1 from Multicast Group G1
PPPPoE Disconnect
Disconnect from BNG
Remote Multicast Packet Template Instance:
Template ID: 1
Bit Index: 2018
Complete PPPoE Disconnect
Remove PPPoE Session
Disable Line ID L1
Disable Line ID L1

# Figure 6

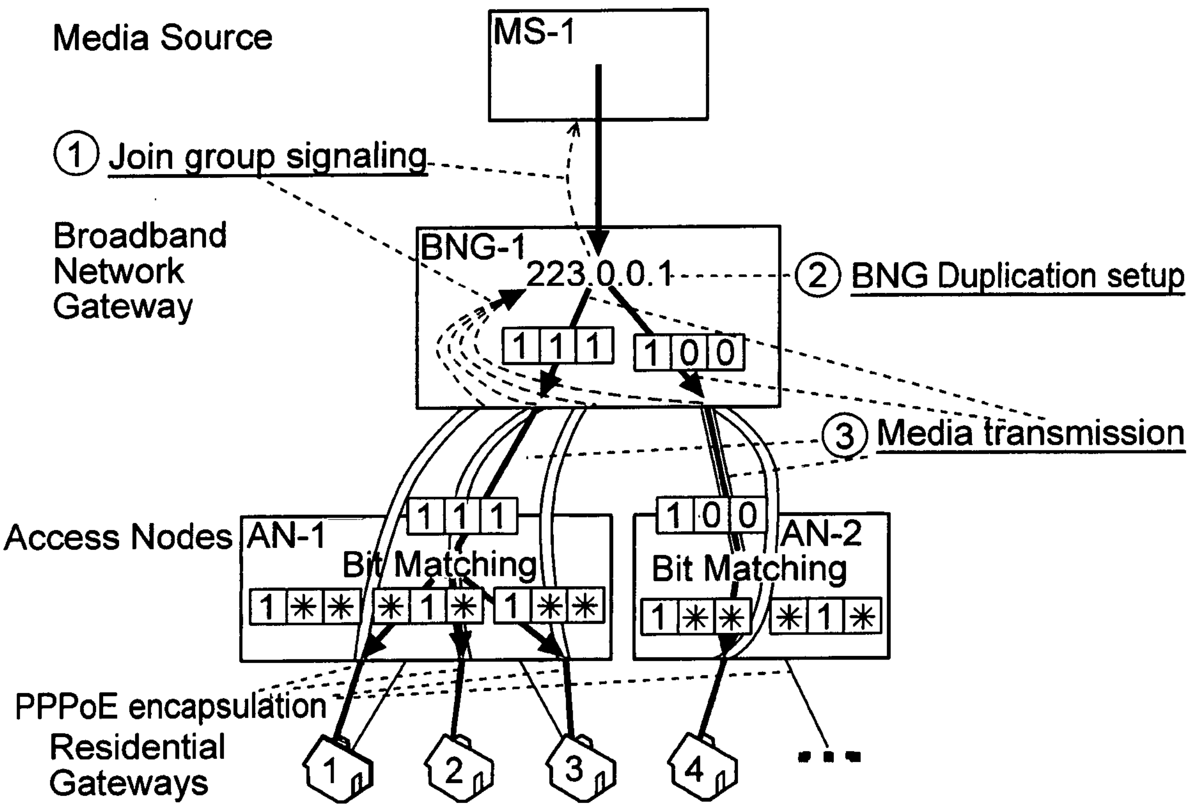
Media Source
MS-1
1 Join group signaling
Broadband
Network
Gateway
BNG-1
223.0.0.1
2 BNG Duplication setup
1 1 1
1 0 0
3 Media transmission
Access Nodes
AN-1
Bit Matching
1 * *
* 1 *
1 * *
AN-2
Bit Matching
1 * *
* 1 *
PPPoE encapsulation
Residential
Gateways
1
2
3
4

# Figure 7

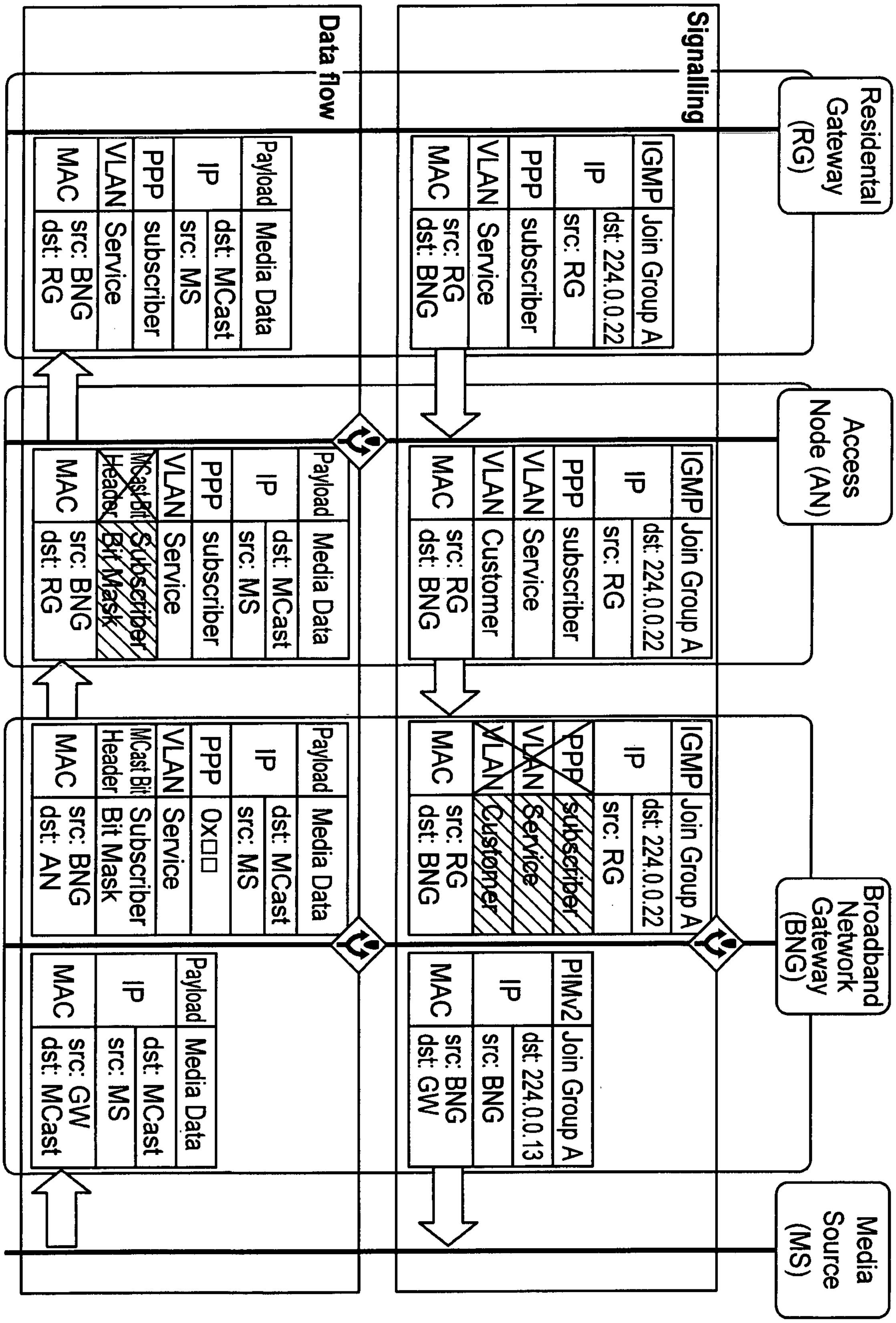
Residential Gateway (RG)
Access Node (AN)
Broadband Network Gateway (BNG)
Media Source (MS)
Signalling
Data flow
IGMP Join Group A
IP dst: 224.0.0.22
src: RG
PPP subscriber
VLAN Service
VLAN Customer
MAC src: RG
dst: BNG
PIMv2 Join Group A
dst: 224.0.0.13
src: BNG
src: BNG
dst: GW
Payload Media Data
dst: MCast
src: MS
PPP 0x□□
MCast Bit Header Subscriber Bit Mask
src: BNG
dst: AN
dst: RG
src: GW
dst: MCast

# Figure 8

0 1 2 3 4 5 6 7 8 9 10 11 12 13 14 15 16 17 18 19 20 21 22 23 24 25 26 27 28 29 30 31

| | | | |
|---|---|---|---|
| Version (0x1) | Type (0x1) | Code (0x0) | Session-ID |
| Length (Fixed for all packet copies) | | | PPP Protocol (Fixed for all packet copies) |

# Figure 9

| Access Node | Direction | Service Edge |
|---|---|---|
| | ⇐ | MSG: Create Multicast Packet Template<br>ID: 1,<br>Bit string length: 4098bit,<br>Bit subset length: 8bit,<br>Var1: offset = 0byte, length = 48bit<br>Var2: offset = 10byte, length = 16bit<br>Var3: line_ID |
| MSG: OK | ⇒ | |
| | ⇐ | MSG: Add Multicast Packet Template Receiver<br>Template ID: 1,<br>Bit Index ID: 1028<br>Var1: value = 02:00:01:02:03:04<br>Var2: value = 3<br>Var3: line_ID = 1001 |
| MSG: OK | ⇒ | |
| | ⇐ | MSG: Remove Multicast Packet Template Receiver<br>Template ID: 1,<br>Bit Index ID: 1028 |
| MSG: OK | ⇒ | |
| | ⇐ | MSG: Remove Multicast Packet Template<br>Template ID: 1, |
| MSG: OK | ⇒ | |

Figure 10

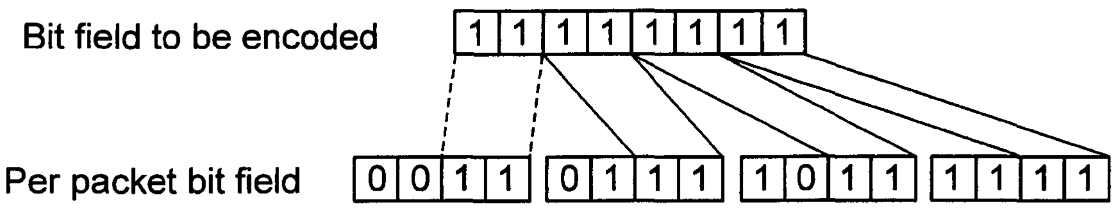


Figure 11

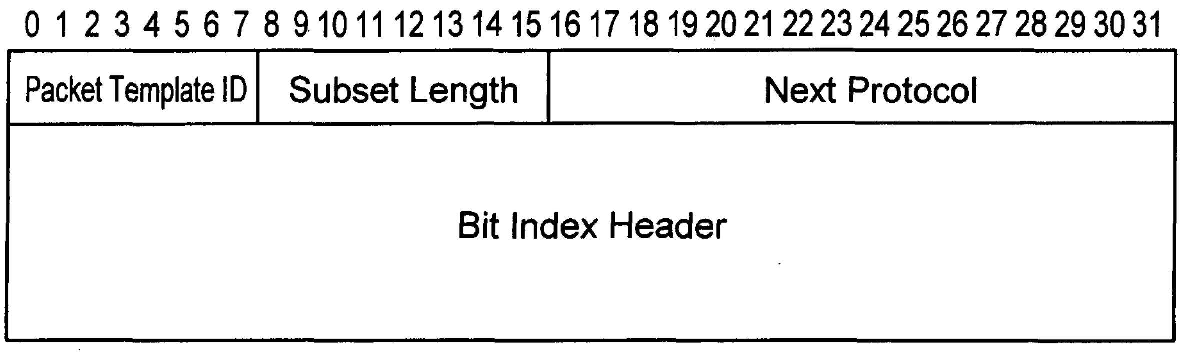

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20160119159 A1
- US 2016127139 A1
- US 2012002546 A1
- US 2013128886 A1
- US 2016134518 A1


### Non-patent literature cited in the description


- **A. GIORGETTI.** First Demonstration of SDN-based Bit Index Explicit Replication (BIER) multicasting. *European Conference on Networks and Communications (EuCNC),* 2017